# EUROPEAN PATENT SPECIFICATION

(11) **EP 2 040 502 B1**
(45) Date of publication and mention of the grant of the patent: **30.08.2017**
(21) Application number: 08275056.3
(22) Date of filing: 22.09.2008
(51) Int. Cl.: H04W 36/14

(54) **Neighbour cell list data**
Nachbarzellenlistendaten
Données de liste de cellules voisines

(30) Priority: 24.09.2007 GB 0718576; 01.05.2008 GB 0807960
(43) Date of publication of application: 25.03.2009
(73) Proprietor: Vodafone Group PLC, Newbury Berkshire RG14 2FN (GB)
(72) Inventor: Patanapongpibul, Leo, Weybridge, Surrey KT13 8JU (GB); Golaup, Assen, Hounslow, Middlesex TW3 2PJ (GB)
(74) Representative: Boult Wade Tennant

(56) References cited:
- US-A1- 2003 218 995
- VODAFONE: "GSM NCL broadcast in E-UTRAN"[Online] 27 September 2007 (2007-09-27), - 28 September 2007 (2007-09-28) pages 1-2, XP002513559 3GPP Workshop GERAN/RAN - Sophia Antipolis, France Retrieved from the Internet: URL:http://www.3gpp1.com/ftp/workshop/2007 -09-27_GERAN-EUTRAN-iwkg/Docs/> [retrieved on 2009-02-04]
- "Digital cellular telecommunications system (Phase 2+); Mobile radio interface layer 3 specification; Radio Resource Control (RRC) protocol (3GPP TS 44.018 version 7.9.0 Release 7); ETSI TS 144 018" ETSI STANDARDS, LIS, SOPHIA ANTIPOLIS CEDEX, FRANCE, vol. 3-G2, no. V7.9.0, 1 June 2007 (2007-06-01), XP014038540 ISSN: 0000-0001
- "Digital cellular telecommunications system (Phase 2+); Radio Subsystem Link Control (3GPP TS 05.08 version 8.17.0 Release 1999); ETSI TS 100 911" ETSI STANDARDS, LIS, SOPHIA ANTIPOLIS CEDEX, FRANCE, vol. 3-G;3-G1;SMG2, no. V8.17.0, 1 June 2003 (2003-06-01), XP014005654 ISSN: 0000-0001
- "Digital cellular telecommunications system (Phase 2+); Functions related to Mobile Station (MS) in idle mode and group receive mode (3GPP TS 03.22 version 8.7.0 Release 1999); ETSI TS 100 930" ETSI STANDARDS, LIS, SOPHIA ANTIPOLIS CEDEX, FRANCE, vol. 3-G1;3-G2;SMG2;SMG3, no. V8.7.0, 1 September 2002 (2002-09-01), XP014005730 ISSN: 0000-0001
- JUERGEN HOFMANN: "Response to LS on neighbour cell list in LTE"[Online] 29 May 2007 (2007-05-29), - 1 June 2007 (2007-06-01) pages 1-3, XP002513560 3GPP TSG RAN Meeting 36 - Busan, Korea Retrieved from the Internet: URL:http://www.3gpp.org/ftp/tsg_ran/TSG_RA N/TSGR_36/Docs/> [retrieved on 2009-02-04]

## Description

### Field of the Invention

This invention relates to a method and network element for optimising the size of a GSM neighbour cell list (NCL) to assist in mobility management, including cell selection, cell reselection, cell change order and/or handover between heterogeneous digital cellular networks. Further this invention relates to a method and system for formulating a neighbour cell list (NCL) to assist in mobility management, including cell selection, cell reselection, cell change order and/or handover, in inter-RAT (Radio Access Technology) transfers between heterogeneous cellular networks, and particularly in relation to inter-RAT transfers from an LTE network to a GSM network.

### Background

Where possible, the expressions "mobility management" or "transfer" will be used in this specification to refer to all procedures where the mobile terminal is allowed to move whilst staying connected to the network(s). This expression will therefore encompass handover and handoff, which are terms usually used to indicate a time critical procedure for switching an active mobile terminal's serving cell. It will also be considered to encompass cell selection, cell reselection and cell change order, which are terms often used to refer to equivalent or at least similar non-time critical procedures for mobile terminals in an idle or stand-by mode.

In currently deployed cellular networks there are typically two different RATs: a second generation (2G) design following the GSM radio access standards and a third generation (3G) design following UMTS Terrestrial Radio Access Network (UTRAN) design. A further fourth generation (4G) design is currently in development, known as LTE (Long Term Evolution), whose radio access is called E-UTRAN (Evolved UMTS Terrestrial Radio Access Network). Once LTE is in use, pre-existing technologies, such as UMTS and GSM, are likely to remain in use as well for some time, so LTE accordingly needs to be compatible with all such continuing technologies.

For instance, from a mobility management viewpoint, if a user is in a GSM or UTRAN network, suitable procedures need to be in place to transfer from an E-UTRAN and vice versa.

With the existing UTRAN (UMTS Terrestrial Radio Access Network) design, in order to facilitate mobility management to a GSM cell, an explicit GSM Neighbouring Cell List (NCL) is sent in UTRAN System Information (SI) broadcast messages to assist mobile terminals in the cell reselection and handover procedure from UTRAN to GSM. This GSM NCL is populated with all the neighbouring GSM cells, which can number up to 32, for the UE (user equipment: i.e. the user's mobile terminal/handset) to measure.

In UTRAN, the GSM neighbour cell list is indicated by means of an explicit list of neighbour cells with at least the information listed in TABLE 1 indicated for each cell.

**TABLE 1**

| **Information Element** | **SIZE (BITS)** |
|---|---|
| Cell Individual Offset | 7 |
| BCCH ARFCN | 10 |
| Band Indicator | 1 |
| BSIC | 6 |
| Cell selection and re-selection info (optional) | |

The Cell Individual Offset is a weighting factor that serves to allocate a relative importance to each cell in the NCL for monitoring purposes.

The Band Indicator is used to differential between GSM DCS 1800 and GSM PCS 1900, which are different implementations of the GSM standard, with DCS 1800 being a derivative based on the 1800MHz band, and PCS 1900 being based on the 1900MHz band.

The BCCH ARFCN is the Broadcast Control Channel Absolute Radio Frequency Channel Number, whilst the BSIC is the Base Station Identity Code. These parameters serve to identify a GSM cell in its Radio Access Network.

US patent application, US2003/0218995 (to SAMSUNG), discloses a method for handling cell measurements in GSM and UMTS simultaneously on a suitable dual-mode mobile device.

It is important that a GSM NCL also be broadcast in E-UTRAN (evolved UTRAN) to mobile terminals (UEs) in order to assist in the handover procedure to GSM, thereby reducing the cell search time and restricting the reselection to only a sub-set of neighbouring cells.

However, if the existing UTRAN approach is adopted in E-UTRAN, the broadcast control channel (BCCH) overhead resulting from the provision of this GSM NCL could be too high. For example, in the case of there being the maximum of 32 neighbouring GSM cells, 800 bits would be required to provide each ARFCN (10 bits) and its respective configuration parameters (15 bits). This is a significant amount of GSM NCL information to be sent on the E-UTRAN BCCH, and to be avoided if possible.

This problem would be exacerbated if there are to be more Radio Access Technologies (RATs) to be supported by the UE. Consequently, techniques are required for reducing the size of all NCLs in the E-UTRAN system information broadcast.

In the light of the preceding discussion it is therefore desirable to minimise the size of the information to convey the NCL, such as the GSM NCL in the SI message broadcast in E-UTRAN. GSM NCL reduction (and indeed the reduction of the NCL size of other RATs) leads to lower BCCH overhead (especially in low bandwidth systems) and hence increased user data capacity.

### Summary of the Invention

According to a first aspect, the present invention provides a method of transmitting a neighbour cell list (NCL) intended for communication to a mobile terminal in a mobile telecommunication network that includes a plurality of network elements of at least a first type and an alternative type, the mobile terminal being configured to access the network via said network elements, the method including:
formulating, by a network element of the first type, the NCL by incorporating information indicating at least one range of frequencies and a frequency selection pattern which designates one or more sub-sets of the at least one range of frequencies that a mobile terminal should monitor, such that the one or more sub-sets comprise a non-inclusive list of frequencies used by network elements of the alternative network type; and
transmitting the NCL from the network element of the first type for receipt by the mobile terminal.

This aspect of the invention is partially based on the principle of providing a range of Absolute Radio Frequency Channel Numbers (ARFCNs) similar to the GERAN (GSM EDGE Radio Access Networks) BA Range.

In this regard, in GSM Radio Access Technology, there is an information element (IE) called the Broadcast control channel Allocation (BA) Range which may be included in a Channel Release message sent to individual mobile terminals (i.e. on a phone-by-phone basis). This information element contains a non-inclusive list of frequencies in use by the network. This information element is not guaranteed by its specification to be an inclusive list of absolutely all frequencies in use across an operator's entire network within a country. The specifications only allows mobile terminals to make use of this information element to speed up the cell selection process by searching on the frequencies specified by the BA range first, before searching on other frequencies. The BA range is a type 4 information element (i.e. of variable length), with a minimum length of 6 octets (i.e. 48 bits) and no maximum length (see 3GPP TS 44.018).

In the method above, the one or more sub-sets designated in the frequency selection pattern are conveniently sub-sets in relation to which the mobile terminal is to perform measurements and the method further includes:
receiving measurement results from the mobile terminal, the measurement results corresponding to the frequency channels indicated by the one or more sub-sets specified in the NCL; and
initiating handover of the mobile terminal from the network element of the first type to a network element of the alternative type, the network element of the alternative type corresponding to one of the measured frequency channels.

Alternatively, the one or more sub-sets designated in the frequency selection pattern are conveniently sub-sets in relation to which the mobile terminal is to perform measurements and the method further may include:; and
receiving measurement results from the mobile terminal, the measurement results corresponding to the frequency channels indicated by the one or more sub-sets specified in the NCL; and
initiating cell reselection of the mobile terminal from the network element of the first type to a network element of the alternative type, the network element of the alternative type corresponding to one of the measured frequency channels.

In any of the above alternatives at least one range of frequencies may be indicated using a first channel number (ARFCN) and offset information.

Furthermore, the first channel number may correspond to a first frequency in the range of frequencies, and the offset information may indicate a final channel number in the range.

Alternatively, the first channel number corresponds to a median frequency of the range of frequencies, and the offset information indicates the number of frequencies either side of the median frequency.

Preferably the at least one ranges of frequencies is indicated by a first channel number (ARFCN) and an indication of the total number of frequencies to be monitored.

Conveniently, the frequency selection pattern is an odd/even pattern.

The frequency selection pattern may also indicate every nth frequency in the one or more frequency range. Alternatively or additionally, the frequency selection pattern may be a bit map pattern that can be used to select particular frequencies in the at least one range of frequencies.

The network element of the first type may preferably transmit the NCL by broadcasting it. Alternatively or additionally, the network element of the first type may transmit the NCL to the mobile terminal over a dedicated channel.

Advantageously, the first network type is LTE and the network element of the first type is an eNode B.

The alternative network type may be GSM (Global System for Mobile communications) and the network element of the alternative type may be a base station.

Preferably, the measurements performed by the mobile terminal include signal strength measurements.

In a recent Liaison Statement (LS) from 3GPP Technical Specification Group (TSG) for GERAN (GSM EDGE Radio Access Networks) to 3GPP TSG for RAN WG2 [see GP-071070, "Response to LS on neighbour cell list in LTE", GERAN#34], in response to a suggestion of indicating a list of possible BCCH frequencies in the NCL to be broadcast in E-UTRAN, it was stated that an indication on used ARFCNs of possible neighbour cells was not sufficient considering overlaps in BCCH frequency planning or frequency reuse at national borders. Therefore, the general principle upon which the present invention is partially based was dismissed as unfeasible.

The present invention in fact provides a solution to the problem envisaged by the TSG for GERAN, since frequencies can be designated in particular regions with greater specificity using the frequency selection pattern. The use of the frequency selection pattern/strategy thereby serves to focus on specific frequencies within the one or more frequency ranges for increased searching efficiency for the UE. In addition, such knowledge of the frequency selection pattern also reduces the GSM NCL size based on a BA range concept.

Preferably the one or more ranges of frequencies are designated using a first ARFCN and offset information (note that if all ranges are assumed to be of same size, it might not be necessary to provide an offset). Alternatively, or in addition, the one or more ranges may be designated using a start and finish ARFCN, similar to that used in the BA range information element.

To illustrate, and considering an ARFCN range similar to the GERAN BA RANGE being used to signal the start and finish ARFCN, where the BCCH are spaced out within this range, and just the BA range is utilised (i.e. the frequency selection pattern is not used), the UE will be additionally searching for cells on frequencies allocated for non-BCCH. This would be likely to cause a delay in the cell search process as the UE would be measuring frequencies which do not have a BCCH carrier. In this regard, in order for the UE to determine whether a carrier frequency is or is not a BCCH carrier, it would first determine whether the carrier is at adequate power, and if so, attempt to synchronise to the cell. It would be during this attempted synchronisation that the UE would finally realise that the carrier is not a BCCH carrier, since it does not include the required FCH (Fundamental Channel) and SCH (Supplementary Channel) data. The UE would therefore then be able to assume that the carrier is only transmitting a non-BCCH mode.

The use of the frequency selection pattern can avoid this problem, as the frequency selection pattern reduces the number of frequencies within the frequency range that are to be monitored/measured, which in turn reduces the processing required and also expedites the monitoring procedure. It also allows a network operator with knowledge of the frequencies used by other RATs to focus on the relevant frequencies when devising a frequency selection pattern for a particular region.

To illustrate this further, if the GERAN NCL of E-UTRAN was coded similar to the BA Range IE in the GSM CHANNEL_RELEASE message, e.g. with two ranges (requiring 7 octets) and one octet allocated for Network Colour Codes (NCC), the size would be 8 octets or 64 bits. Using only this coding (i.e. with no frequency selection pattern) assumes that all the BCCH frequencies are in one block, which is unlikely. It would also entail the UE monitoring the entire range of ARFCNs, which may also be onerous. Therefore by introducing the frequency selection pattern, in addition to the other coding, fewer channels need to be monitored.

In relation to a further problem, in some networks a scheme is used to split the available frequency band between BCCH and non-BCCH frequencies in a manner that ensures that BCCH frequencies are not on adjacent channels and hence are less subject to adjacent channel interference (e.g. every other, or every 3rd frequency is used as a BCCH frequency). In the Idle mode neighbour cell list for a GERAN cell, it is only the BCCH frequencies which need to be signalled. The present invention advantageously also provides a solution which can be applied to this situation.

To summarise, in line with the invention, the NCL also includes information about the cell planning strategy of the operator, which can help to avoid the UE measuring the frequencies allocated for non-BCCH carriers. This would also avoid the need for the UE to monitor the entire range of ARFCNs, and therefore, it would speed up the alternative RAT cell detection process. Finally, such knowledge of the cell planning strategy can result in a smaller GSM NCL size.

In accordance with yet another aspect of the invention, there is provided a network element of a first type configured for use in a mobile telecommunication network including a plurality of network elements of at least a first type and an alternative type, the network element of the first type being configured to formulate a neighbour cell list (NCL) intended for communication to a mobile terminal, and the network element of the first type is further configured to:
formulate the NCL by incorporating information indicating at least one range of frequencies and a frequency selection pattern which designates one or more sub-sets of the at least one range of frequencies that a mobile terminal should monitor, such that the one or more sub-sets comprise a non-inclusive list of frequencies used by network elements of the alternative type; and
transmit the NCL for receipt by the mobile terminal.

The network element of the first type is preferably configured to indicate the at least one range of frequencies using a first Channel Number (ARFCN) and offset information. The network element of the first type may further be configured to indicate that the first channel number corresponds to a first frequency in the range of frequencies, and the offset information indicates a final channel number in the range.

Alternatively, the network element of the first type may further be configured to designate the first channel number as corresponding to a median frequency of the range of frequencies, and the offset information using a number of frequencies either side of the median frequency.

In a further alternative, the network element of the first type may be further configured to designate the at least one range of frequencies using a first channel number (ARFCN) and an indication of the total number of frequencies to be monitored.

The network element of the first type is conveniently configured to indicate the frequency selection pattern is an odd/even pattern.

Alternatively the network element may be further configured to indicate the frequency selection pattern indicates every nth frequency in the one or more frequency range.

The network element of the first type may also be configured to indicate the frequency selection pattern as a bit map pattern that is used to select particular frequencies in the at least one range of frequencies.

Advantageously the network element of the first type transmits the NCL by broadcasting it. Alternatively, the network element of the first type may transmit the NCL to the mobile terminal over a dedicated channel.

Advantageously, the first network type is LTE and the network element of the first type is an eNode B.

The alternative network type may be GSM (Global System for Mobile communications) and the network element of the alternative type may be a base station.

In a further aspect of the invention there is provided a mobile terminal configured for use in a mobile telecommunication network including a plurality of network elements of at least a first type and an alternative type, wherein the mobile terminal is in communication with a network element of a first type, the mobile terminal being further configured to:
receive a neighbour cell list (NCL) from the network element of the first type, the NCL including information indicating at least one range of frequencies and a frequency selection pattern which designates one or more sub-sets of the at least one range of frequencies, wherein the one or more sub-sets comprise a non-inclusive list of frequencies used by the network element of the alternative type;
perform measurements on channels corresponding to the frequencies of the one or more sub-sets.
The mobile terminal may advantageously be configured to initiate cell reselection when the measurements performed indicate a transfer is necessary.

### Brief Description of the Drawings

Figure 1 illustrates an example of a network in which the embodiments of the invention may be implemented;
Figure 2 illustrates an example of a bit map that can be used as a cell planning strategy according to an embodiment of the invention; and
Figure 3 illustrates the coding for a BA Range Information Element, as specified in 3GPP TS 44.018, that may be utilised in designating at least one frequency range in an NCL according to a further embodiment of the invention.

### Detailed Description

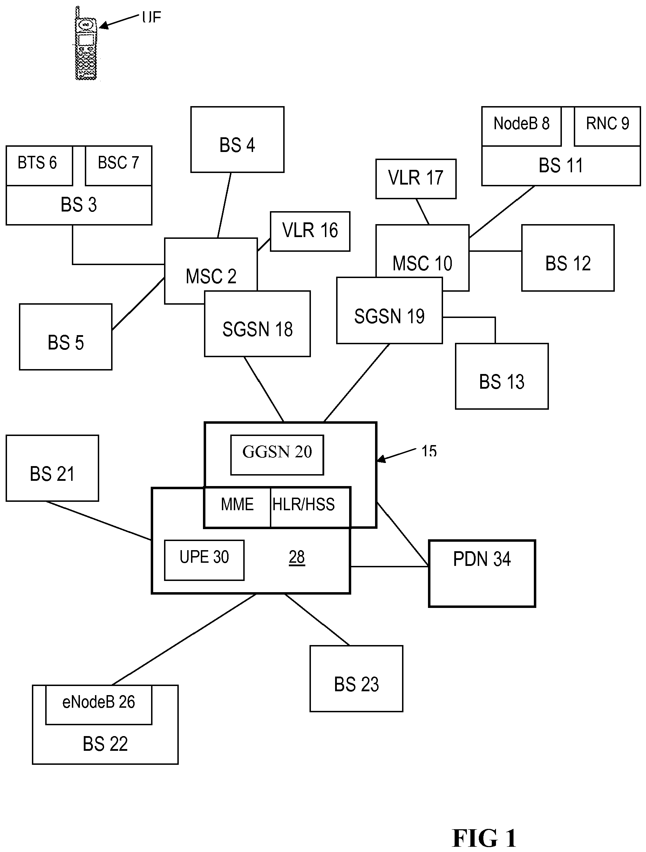

Key elements of a mobile telecommunications network, and its operation, will now briefly be described with reference to Figure 1.

Each base station (BS) (3,4,5,11,12,13,21,22,23) corresponds to a respective cell of its cellular or mobile telecommunications network and receives calls/data from and transmits calls/data to a mobile terminal in that cell by wireless radio communication in one or both of the circuit switched or packet switched domains. Such a subscriber's mobile terminal (or User Equipment-UE) is shown at 1. The mobile terminal may be a handheld mobile telephone, a personal digital assistance (PDA), a laptop computer equipped with a datacard, or a laptop computer with an embedded chipset containing the UE's functionality.

In a GSM (2G) mobile telecommunications network, each base station subsystem 3, 4, 5 comprises a base station controller (BSC) 7 controlling at least one base transceiver station (BTS) 6. The BTSs and BSCs comprise the radio access network.

In a UMTS (3G) mobile telecommunications network, a corresponding base station subsystem 11, 12, 13 comprises a radio network controller (RNC) 9 controlling at least one node B 8. The node B's and RNC's comprise the radio access network.

In an LTE mobile telecommunications network, a corresponding base station subsystem 21, 22. 23 comprises an eNodeB 26 (evolved Node B), which effectively combines the Node B and RNC functionality into a single entity. The Radio Resource Control (RRC) signalling with the mobile terminal 1 therefore terminates at the eNode B 26, and the eNode B comprises the RAN of the LTE network.

Conventionally, base stations are arranged in groups and each group of base stations is controlled by one mobile switching centre (MSC), such as MSC 2 for base stations 3, 4 and 5, and MSC 10 for base stations 11, 12 and 13. In practice, the network will incorporate many more MSCs and base stations than shown in Figure 1.

The MSCs 2 and 10 support communications in the circuit switched domain - typically voice calls. Each MSC has a Visitor Location Register (VLR) 16, 17 for storing data in relation mobile terminals visiting an area controlled by the MSC. Corresponding SGSNs 18 and 19 are provided to support communications in the packet switched domain - such as GPRS data transmissions. The SGSNs 18 and 19 function in an analogous way to the MSCs 2 and 10. GGSN 20 provides IP connectivity for the Core Network 15.

In regard to the LTE network the eNode B 26 performs the functions of both the Node B and a large part of the RNC of the 3G/UMTS network. The network core 28 of the LTE network includes User Plane Entity (UPE) 30, the HLR/HSS 14 (a common HLR/HSS shared with the network core 15 of the GSM/UMTS network) and also Mobility Management Entity (MME) 32 (also shared with the network core 15 of the GSM/UMTS network). A plurality of UPEs may be provided, although only one is shown.

Although shown separately in Figure 1, the UPE 30 and GGSN 20 may be combined to form a single element. For the purposes of this document, UPE 30 and GGSN 20 are considered to be a common element with one interface to Packet Data Network (PDN) 34 (for example, the Internet).

As a plurality of different Radio Access Technologies (RATs) co-exist in Figure 1, it is possible that multiple RATs may be available to service a UE in a particular area. For example, a UE may be in an area where the serving RAT is LTE, but GSM cells may also be available. The UE will therefore have a serving LTE cell and be surrounded by a number of neighbouring cells belonging to the serving RAT and alternative GSM cells.

In this scenario, a UE 1 in idle mode (i.e. when UE does not have dedicated resources allocated to it), may be camped in its serving cell, and be receiving System Information (SI) messages broadcast by the serving cell, e.g. broadcast by eNode B 26. As indicated earlier, a cell is a particular coverage area of the network, served by a given base station.

The broadcast system information includes the NCL. The UE will make measurements on the UE's current frequency layer or RAT (i.e. E-UTRAN), and thereby determine if and when the signal quality of the serving cell falls below a signal quality threshold value. This signal quality threshold value is used in the inter-RAT measurement rules to trigger a requirement for measurements to be made on alternative RATs, in this example being GSM. It is worth noting that the signal quality threshold value is generally uniquely defined for each RAT by the network operator.

Once measurements of the alternative RAT (i.e. GSM) are triggered, the UE is expected to measure all GSM cells indicated in the NCL, and to rank the cells to determine the best cell to which the UE should reselect or handover to. The criterion for being "best" is typically the cell having the highest average signal strength.

The UE typically sends the measurement results for the neighbouring GSM cells as a report to the network, which analyses the results and decides whether a switch from LTE to GSM is desirable.

In active mode, the eNode B 26 will send the NCL to the UE on a dedicated channel. The UE will makes measurements on all the cells indicated in the NCL for each frequency layer/RAT (i.e. LTE and GSM). If certain measurement report criteria are met the UE will report the measurement results to the network via eNode B 26, which can then trigger a handover to another cell, such as a GSM cell.

In this regard, where a mobile terminal is active, in order to allow the terminal to maintain a call when it moves outside the coverage area of its serving cell managed by BS 22, the call must be switched to an alternative neighbouring cell. For handover to be effected efficiently, the call must be routed to the new cell whilst maintaining the connection with the old cell until the new connection is known to have succeeded. Handover is a time critical process requiring action to be taken before the radio link with the original cell degrades to such an extent that the call is lost. Handover therefore requires synchronisation of events between the mobile terminal and the networks.

In summary, in either of these scenarios (i.e. idle or active), the UE, with a serving LTE cell, would be monitoring the frequencies designated in the Neighbour Cell List, received from the serving cell or network, as applicable.

According to a first embodiment of the invention, the Neighbour Cell List that is broadcast includes a 'start ARFCN', an offset from the 'start ARFCN' to indicate the frequency range to be monitored/measured and an indication of the cell/frequency selection scheme being adopted. A summary of the information elements of the NCL and their size is listed in TABLE 2.

In this embodiment, the frequency selection scheme is a simple ODD/EVEN pattern. For example, if the UE is to measure odd numbered frequencies in order to detect alternative GSM cells, the relevant bit in the NCL is set to "0". Alternatively, it can be "1" where even numbered frequencies are to be monitored.

**TABLE 2**

| **Information Element** | **SIZE/BITS** |
|---|---|
| Start ARFCN | 10 |
| Offset (for a maximum of 32 neighbour cells) | 5 |
| Frequency selection pattern (even/odd) | 1 |
| NCC permitted | 8 |
| **Total size** | **24** |

From the above embodiment, one benefit of the invention is apparent, being that the NCL size can be reduced to 24 bits, instead of the 768 bits that would be required for 32 neighbouring cells were the current UTRAN technique utilised.

In this embodiment, the frequency selection strategy takes the form of an alternating odd/even pattern. This approach would be useful where the BCCH frequencies have been chosen by the network operator to be alternating odd or even ARFCNs, such as to in order to reduce interference.

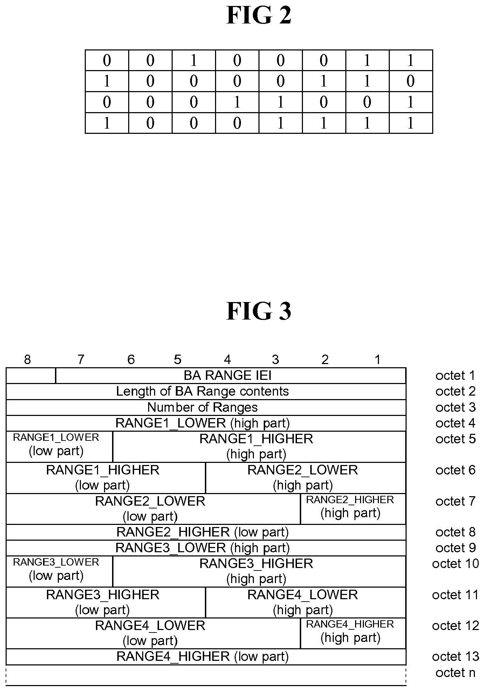

Any other alternative frequency selection pattern may be utilised. For instance according to an alternative embodiment, the frequency selection pattern comprises a bit map or mask which indicates the channels in the range that are to be monitored. For instance, with reference to Figure 2, an example of a bit map that may be used as an overlay to thirty two channels is shown.

In the bit map of Figure 2, the channels are indicated sequentially, row by row, and a "1" indicates a frequency channel to be monitored and a "0" indicates one which is not. For instance, considering just the first row of Figure 2, the third, seventh and eighth channels in the range of thirty two channels are to be monitored. This embodiment of the invention does require the number of bits allocated to the frequency selection pattern to be increased over the odd/even embodiment. For instance, the Figure 2 mask would require a frequency selection pattern to total 32 bits. Inserting this new number of bits into the NCL of Table 2, the total size of the NCL would be 55 bits, which is still markedly smaller than the 800 bits required with the unoptimised UTRAN approach.

According to a still further alternative embodiment, the BCCH frequencies are on ARFCN MOD 5 = 1 and/or 3 and so the planning pattern has a corresponding form.

As a still further alternative, the frequency range and the frequency selection pattern may specify the frequencies to be monitored by designating a start ARFCN and every 2nd (or 3^{rd} or nth) subsequent ARFCN along with an indication of the total number of BCCH frequencies.

According to a still further alternative embodiment, where a plurality of frequency ranges is required, instead of using the "Start ARFCN" and "Offset" ARFCN approach multiple times, or additional ARFCN ranges, a BA RANGE information element could be used instead of the "Start ARFCN" and "OffSet" fields in the above example. The existing BA RANGE information element specified in [3GPP] TS 44.018 and shown in Figure 3, has a minimum size of six octets and no maximum size, so can cover an unlimited number of ranges. In the example information element shown in Figure 3, 13 octets allows up to four ranges to be specified. While this approach would result in a larger NCL size than the "Start ARFCN" approach, it would still lead to a smaller GSM NCL size than the other solutions under consideration, particularly the UTRAN approach described above.

For instance, a GSM NCL indicated by means of a BCCH Frequency List (16 octets) bit map and an NCC permitted Information Element (1 octet) would total 137 bits, but would not limit the NCL to 32 GSM neighbour cells.

As indicated above, the true benefit of these embodiments of the invention can be realised when contrasted with the unoptimised arrangement based on UTRAN, such that assuming a maximum of 32 GSM cells can be configured in the unoptimised arrangement, the GSM NCL size would total 768 bits (excluding the optional field). This is a significant amount of GSM NCL information to send on the E-UTRAN BCCH.

While it is also be possible to optimise the UTRAN NCL by excluding the cell individual offset parameter in the inter-RAT cell info list, doing this would bring the total NCL size to 544 bits (i.e. only the BCCH ARFCN, Band Indicator and BSIC are transmitted), which is still quite large. In this regard, the volume of the transmitted information is reduced by excising the cell individual offset parameter, as it is a little-used parameter. This is possible due to the design of the GERAN NCL broadcast in UTRAN was based on that of PBCCH in GPRS, which allowed the signalling of cell individual offsets in the NCL. However, most operators have not deployed PBCCH in their GERAN network.

Based on the above solutions, the size of the broadcast/transmitted GSM NCL size broadcast in E-UTRAN can be dramatically reduced to that of UTRAN. The use of a frequency selection pattern means that the entire range of ARFCN does not need to be monitored by the UE. Further, by including information about the frequency selection strategy of the operator in the NCL, it becomes possible for the UE to avoid measuring the frequencies allocated for non-BCCH carriers.

Further benefits of these embodiments of the invention include:
- A significant reduction in the size of the GSM NCL which would help in reducing system information broadcast overhead in E-UTRAN and consequently make more capacity being available for user data.
- A reduction in cell search time due to the UE having less frequencies to monitor.
- More measurements being possible per cell per second due to UE having a reduced number of cells to measure; and
- More measurements being possible per cell per second due to UE only measuring frequencies containing BCCH carriers.

These embodiments of the invention have been particularly described in relation to mobility management from an LTE network to a GSM network, however, the inventive concept may equally apply to any other NCL used in inter-RAT transfers.

Further, the invention is not to be considered as limited to the embodiments described, with other changes and additions possible. For instance, rather than using a Start ARFCN and an End ARFCN to indicate a frequency range, a median ARFCN may be used, and the offset information may indicate the number of frequencies either side of this median ARFCN that make up the range. The scope of the invention is however defined by the appended claims.

## Claims

1. A method of transmitting a neighbour cell list, NCL, intended for communication to a mobile terminal in a mobile telecommunication network that includes a plurality of network elements of at least a first type and an alternative type, the mobile terminal being configured to access the network via said network elements, the method including:
formulating, by a network element of the first type, the NCL by incorporating information indicating at least one range of frequencies and a frequency selection pattern which designates one or more sub-sets of the at least one range of frequencies that a mobile terminal should monitor, such that the one or more sub-sets comprise a non-inclusive list of frequencies used by network elements of the alternative type; and
transmitting the NCL from the network element of the first type for receipt by the mobile terminal.

2. A method as claimed in claim 1, wherein the one or more sub-sets designated in the frequency selection pattern are sub-sets in relation to which the mobile terminal is to perform measurements; and
the method further including:
receiving measurement results from the mobile terminal, the measurement results corresponding to the frequency channels indicated by the one or more sub-sets specified in the NCL; and
initiating handover of the mobile terminal from the network element of the first type to a network element of the alternative type, the network element of the alternative type corresponding to one of the measured frequency channels.

3. A method as claimed in claim 1, wherein the one or more sub-sets designated in the frequency selection pattern are sub-sets in relation to which the mobile terminal is to perform measurements; and
receiving measurement results from the mobile terminal, the measurement results corresponding to the frequency channels indicated by the one or more sub-sets specified in the NCL; and
initiating cell reselection of the mobile terminal from the network element of the first type to a network element of the alternative type, the network element of the alternative type corresponding to one of the measured frequency channels.

4. The method of any one preceding claim wherein at least one range of frequencies is indicated using a first channel number, Absolute Radio Frequency Channel Number, ARFCN, and offset information.

5. The method of claim 4 wherein the first channel number corresponds to a first frequency in the range of frequencies, and the offset information indicates a final channel number in the range.

6. The method of claim 4 wherein the first channel number corresponds to a median frequency of the range of frequencies, and the offset information indicates the number of frequencies either side of the median frequency.

7. The method of claim 1, 2 or 3 wherein the at least one ranges of frequencies is indicated by a first channel number, ARFCN, and an indication of the total number of frequencies to be monitored.

8. The method of any one preceding claim wherein the frequency selection pattern is an odd/even pattern.

9. The method of any one preceding claim wherein the frequency selection pattern indicates every nth frequency in the one or more frequency range.

10. The method of any one preceding claim wherein the frequency selection pattern is a bit map pattern that can be used to select particular frequencies in the at least one range of frequencies.

11. A network element of a first type configured for use in a mobile telecommunication network including a plurality of network elements of at least a first type and an alternative type, the network element of the first type being configured to formulate a neighbour cell list, NCL, intended for communication to a mobile terminal, and the network element of the first type is further configured to:
formulate the NCL by incorporating information indicating at least one range of frequencies and a frequency selection pattern which designates one or more sub-sets of the at least one range of frequencies that a mobile terminal should monitor, such that the one or more sub-sets comprise a non-inclusive list of frequencies used by network elements of the alternative type; and
transmit the NCL for receipt by the mobile terminal.

12. The network element of the first type in accordance with claim 11, wherein the network element of the first type is further configured to indicate the at least one range of frequencies using a first Channel Number, an Absolute Radio Frequency Channel Number, ARFCN, and offset information.

13. The network element of the first type in accordance with claim 12, wherein the network element of the first type is further configured to indicate that the first channel number corresponds to a first frequency in the range of frequencies, and the offset information indicates a final channel number in the range.

14. The network element of the first type in accordance with claim 12 wherein the network element of the first type is further configured to designate the first channel number as corresponding to a median frequency of the range of frequencies, and the offset information using a number of frequencies either side of the median frequency.

15. The network element of the first type in accordance with claim 11, wherein the network element of the first type is further configured to designate the at least one range of frequencies using a first channel number, ARFCN, and an indication of the total number of frequencies to be monitored.

16. The network element of the first type in accordance with any one of claims 11 to 15, wherein the network element of the first type is further configured to indicate the frequency selection pattern is an odd/even pattern.

17. The network element of the first type in accordance with any one of claims 11 to 15, wherein the network element of the first type is further configured to indicate the frequency selection pattern indicates every nth frequency in the one or more range of frequencies.

18. The network element of the first type in accordance with any one of claims 11 to 15 wherein the network element of the first type is further configured to indicate the frequency selection pattern as a bit map pattern that is used to select particular frequencies in the at least one range of frequencies.

19. A mobile terminal configured for use in a mobile telecommunication network including a plurality of network elements of at least a first type and an alternative type, wherein the mobile terminal is in communication with a network element of a first type, the mobile terminal being further configured to:
receive a neighbour cell list, NCL, from the network element of the first type, the NCL including information indicating at least one range of frequencies and a frequency selection pattern which designates one or more sub-sets of the at least one range of frequencies, wherein the one or more sub-sets comprises a non-inclusive list of frequencies used by the network element of the alternative type;
perform measurements on channels corresponding to the frequencies of the one or more sub-sets.

20. The mobile terminal of claim 19 which is further configured to initiate cell reselection when the measurements performed indicate a transfer is necessary.

## Patentansprüche

1. Ein Verfahren zur Übertragung einer Nachbarzellenliste (Neighbour Cell List, NCL) zur Kommunikation an ein mobiles Endgerät in einem mobilen Telekommunikationsnetzwerk, das zahlreiche Netzwerkelemente von mindestens einem ersten Typ und einem alternativen Typ aufweist, wobei das mobile Endgerät eingerichtet ist, um über die genannten Netzwerkelemente auf das Netzwerk zuzugreifen, wobei das Verfahren Folgendes umfasst:
Formulieren der NCL über ein Netzwerkelement des ersten Typs, indem Informationen eingebunden werden, die mindestens einen Frequenzbereich und ein Frequenzauswahlschema angeben, das mindestens eine Untergruppe des mindestens einen Frequenzbereichs bestimmt, den ein mobiles Endgerät überwachen soll, sodass die mindestens eine Untergruppe eine nicht erschöpfende Liste von Frequenzen umfasst, die von Netzwerkelementen des alternativen Typs verwendet werden; und
Übertragen der NCL von dem Netzwerkelement des ersten Typs für den Empfang durch das mobile Endgerät.

2. Ein Verfahren nach Anspruch 1, wobei es sich bei der mindestens einen Untergruppe, die im Frequenzauswahlschema bestimmt wurde, um eine Untergruppe im Zusammenhang damit handelt, welches mobile Endgerät die Messungen durchführen soll; und
wobei das Verfahren weiter Folgendes umfasst:
Empfangen von Messergebnissen von dem mobilen Endgerät, wobei die Messergebnisse den Frequenzkanälen entsprechen, die von der mindestens einen, in der NCL festgelegten Untergruppe angegeben werden; und
Initiieren der Übergabe des mobilen Endgeräts vom Netzwerkelement des ersten Typs an ein Netzwerkelement des alternativen Typs, wobei das Netzwerkelement des alternativen Typs einem der gemessenen Frequenzkanäle entspricht.

3. Ein Verfahren nach Anspruch 1, wobei es sich bei der mindestens einen Untergruppe, die im Frequenzauswahlschema bestimmt ist, um eine Untergruppe im Zusammenhang damit handelt, welches mobile Endgerät die Messungen durchführen soll; und
Empfangen von Messergebnissen von dem mobilen Endgerät, wobei die Messergebnisse den Frequenzkanälen entsprechen, die von der mindestens einen, in der NCL festgelegten Untergruppe angegeben werden; und
Initiieren der Zellenneuselektion des mobilen Endgeräts vom Netzwerkelement des ersten Typs zu einem Netzwerkelement des alternativen Typs, wobei das Netzwerkelement des alternativen Typs einem der gemessenen Frequenzkanäle entspricht.

4. Das Verfahren nach einem der vorhergehenden Ansprüche, wobei der mindestens eine Frequenzbereich anhand einer ersten Kanalnummer, einer absoluten Funkfrequenznummer (Absolute Radio Frequency Channel Number, ARFCN) und anhand von Offset-Informationen angegeben wird.

5. Das Verfahren nach Anspruch 4, wobei die erste Kanalnummer einer ersten Frequenz im Frequenzbereich entspricht und die Offset-Informationen eine letzte Kanalnummer in dem Bereich angeben.

6. Das Verfahren nach Anspruch 4, wobei die erste Kanalnummer einer mittleren Frequenz des Frequenzbereichs entspricht und die Offset-Informationen die Anzahl an Frequenzen auf einer beliebigen Seite der mittleren Frequenz angeben.

7. Das Verfahren nach Anspruch 1, 2 oder 3, wobei der mindestens eine Frequenzbereich durch eine erste Kanalnummer, eine ARFCN und eine Angabe der Gesamtanzahl der zu überwachenden Frequenzen angegeben wird.

8. Das Verfahren nach einem der vorhergehenden Ansprüche, wobei es sich bei dem Frequenzauswahlschema um ein Ungerade/Gerade-Schema handelt.

9. Das Verfahren nach einem der vorhergehenden Ansprüche, wobei das Frequenzauswahlschema jede n-te Frequenz in dem mindestens einen Frequenzbereich angibt.

10. Das Verfahren nach einem der vorhergehenden Ansprüche, wobei es sich bei dem Frequenzauswahlschema um ein Bitmap-Schema handelt, das zum Auswählen bestimmter Frequenzen in dem mindestens einen Frequenzbereich verwendet werden kann.

11. Ein Netzwerkelement eines ersten Typs, das für die Verwendung in einem mobilen Kommunikationsnetzwerk eingerichtet ist, das eine Vielzahl von Netzwerkelementen von mindestens einem ersten Typ und einem alternativen Typ umfasst, wobei das Netzwerkelement des ersten Typs eingerichtet ist, um eine Nachbarzellenliste (NCL) zu formulieren, die der Kommunikation an ein mobiles Endgerät dient, und wobei das Netzwerkelement des ersten Typs weiter für folgende Zwecke eingerichtet ist:
Formulieren der NCL, indem Informationen eingebunden werden, die mindestens einen Frequenzbereich und ein Frequenzauswahlschema angeben, das mindestens eine Untergruppe des mindestens einen Frequenzbereichs bestimmt, den ein mobiles Endgerät überwachen soll, sodass die mindestens eine Untergruppe eine nicht erschöpfende Liste von Frequenzen umfasst, die von Netzwerkelementen des alternativen Typs verwendet werden; und
Übertragen der NCL für den Empfang durch das mobile Endgerät.

12. Das Netzwerkelement des ersten Typs gemäß Anspruch 11, wobei das Netzwerkelement des ersten Typs weiter eingerichtet ist, um den mindestens einen Frequenzbereich anhand einer ersten Kanalnummer, einer absoluten Funkfrequenznummer (Absolute Radio Frequency Channel Number, ARFCN) und anhand von Offset-Informationen anzugeben.

13. Das Netzwerkelement des ersten Typs nach Anspruch 12, wobei das Netzwerkelement des ersten Typs weiter eingerichtet ist, um anzugeben, dass die erste Kanalnummer einer ersten Frequenz im Frequenzbereich entspricht, und wobei die Offset-Informationen eine letzte Kanalnummer im Bereich angeben.

14. Das Netzwerkelement des ersten Typs nach Anspruch 12, wobei das Netzwerkelement des ersten Typs weiter eingerichtet ist, um die erste Kanalnummer als Entsprechung einer mittleren Frequenz im Frequenzbereich zu bestimmen und die Offset-Informationen anhand einer Anzahl von Frequenzen auf einer beliebigen Seite der mittleren Frequenz zu bestimmen.

15. Das Netzwerkelement des ersten Typs nach Anspruch 11, wobei das Netzwerkelement des ersten Typs weiter eingerichtet ist, um den mindestens einen Frequenzbereich anhand einer ersten Kanalnummer, einer ARFCN und einer Angabe der Gesamtanzahl der zu überwachenden Frequenzen zu bestimmen.

16. Das Netzwerkelement des ersten Typs entsprechend einem beliebigen der Ansprüche 11 bis 15, wobei das Netzwerkelement des ersten Typs weiter eingerichtet ist, um anzugeben, dass es sich bei dem Frequenzauswahlschema um ein Ungerade/Gerade-Schema handelt.

17. Das Netzwerkelement des ersten Typs nach einem der Ansprüche 11 bis 15, wobei das Netzwerkelement des ersten Typs weiter eingerichtet ist, um anzugeben, dass das Frequenzauswahlschema jede n-te Frequenz in dem mindestens einen Frequenzbereich angibt.

18. Das Netzwerkelement des ersten Typs nach einem der Ansprüche 11 bis 15, wobei das Netzwerkelement des ersten Typs weiter eingerichtet ist, um das Frequenzauswahlschema als Bitmap-Schema anzugeben, mithilfe dessen bestimmte Frequenzen in dem mindestens einen Frequenzbereich ausgewählt werden.

19. Ein mobiles Endgerät, das für die Verwendung in einem mobilen Kommunikationsnetzwerk eingerichtet ist, das eine Vielzahl von Netzwerkelementen von mindestens einem ersten Typ und einem alternativen Typ umfasst, wobei das mobile Endgerät mit einem Netzwerkelement eines ersten Typs kommuniziert, wobei das mobile Endgerät weiter für folgende Zwecke eingerichtet ist:
Empfangen einer Nachbarzellenliste (NCL) vom Netzwerkelement des ersten Typs, wobei die NCL Informationen umfasst, die mindestens einen Frequenzbereich und ein Frequenzauswahlschema angeben, das mindestens eine Untergruppe des mindestens einen Frequenzbereichs bestimmt, wobei die mindestens eine Untergruppe eine nicht erschöpfende Liste von Frequenzen umfasst, die von dem Netzwerkelement des alternativen Typs verwendet werden;
Durchführen von Messungen auf Kanälen, die den Frequenzen der mindestens einen Untergruppe entsprechen.

20. Das mobile Endgerät nach Anspruch 19, das weiter eingerichtet ist, um die Zellenneuselektion zu initiieren, wenn die durchgeführten Messungen darauf hinweisen, dass eine Übertragung erforderlich ist.

## Revendications

1. Un procédé de la transmission d'une liste de cellules voisines, NCL, destinée à une communication à un terminal mobile dans un réseau de télécommunication mobile qui comprend une pluralité d'éléments de réseau d'au moins un premier type et d'un autre type, le terminal mobile étant configuré de façon à accéder au réseau par l'intermédiaire desdits éléments de réseau, le procédé comprenant :
la formulation, par un élément de réseau du premier type, de la NCL par l'incorporation d'informations indiquant au moins une gamme de fréquences et un modèle de sélection de fréquence qui désigne un ou plusieurs sous-ensembles de la au moins une gamme de fréquences qu'un terminal mobile doit surveiller, de sorte que les un ou plusieurs sous-ensembles comprennent une liste non inclusive de fréquences utilisées par des éléments de réseau de l'autre type, et
la transmission de la NCL de l'élément de réseau du premier type pour une réception par le terminal mobile.

2. Un procédé selon la Revendication 1, où les un ou plusieurs sous-ensembles désignés dans le modèle de sélection de fréquence sont des sous-ensembles en relation avec lesquels le terminal mobile doit exécuter des mesures, et
le procédé comprenant en outre :
la réception de résultats de mesure à partir du terminal mobile, les résultats de mesure correspondant aux canaux de fréquence indiqués par les un ou plusieurs sous-ensembles spécifiés dans la NCL, et
le lancement d'un transfert du terminal mobile de l'élément de réseau du premier type vers un élément de réseau de l'autre type, l'élément de réseau de l'autre type correspondant à un des canaux de fréquence mesurés.

3. Un procédé selon la Revendication 1, où les un ou plusieurs sous-ensembles désignés dans le modèle de sélection de fréquence sont des sous-ensembles en relation avec lesquels le terminal mobile doit exécuter des mesures, et
la réception de résultats de mesure à partir du terminal mobile, les résultats de mesure correspondant aux canaux de fréquence indiqués par les un ou plusieurs sous-ensembles spécifiés dans la NCL, et
le lancement d'une resélection de cellule du terminal mobile de l'élément de réseau du premier type vers un élément de réseau de l'autre type, l'élément de réseau de l'autre type correspondant à un des canaux de fréquence mesurés.

4. Le procédé selon l'une quelconque des Revendications précédentes où au moins une gamme de fréquences est indiquée au moyen d'un premier numéro de canal, numéro de canal de fréquence radio absolu, ARFCN, et d'informations de décalage.

5. Le procédé selon la Revendication 4 où le premier numéro de canal correspond à une première fréquence dans la gamme de fréquences et les informations de décalage indiquent un numéro de canal final dans la gamme.

6. Le procédé selon la Revendication 4 où le premier numéro de canal correspond à une fréquence médiane de la gamme de fréquences et les informations de décalage indiquent le nombre de fréquences de chaque côté de la fréquence médiane.

7. Le procédé selon la Revendication 1, 2 ou 3 où la au moins une des gammes de fréquences est indiquée par un premier numéro de canal, ARFCN, et une indication du nombre total de fréquences à surveiller.

8. Le procédé selon l'une quelconque des Revendications précédentes où le modèle de sélection de fréquence est un modèle pair/impair.

9. Le procédé selon l'une quelconque des Revendications précédentes où le modèle de sélection de fréquence indique chaque nième fréquence dans les une ou plusieurs gammes de fréquences.

10. Le procédé selon l'une quelconque des Revendications précédentes où le modèle de sélection de fréquence est un modèle de topogramme binaire qui peut être utilisé de façon à sélectionner des fréquences particulières dans la au moins une gamme de fréquences.

11. Un élément de réseau d'un premier type configuré pour une utilisation dans un réseau de télécommunication mobile comprenant une pluralité d'éléments de réseau d'au moins un premier type et d'un autre type, l'élément de réseau du premier type étant configuré de façon à formuler une liste de cellules voisines, NCL, destinée à une communication vers un terminal mobile, et l'élément de réseau du premier type est configuré en outre de façon à :
formuler la NCL par l'incorporation d'informations indiquant au moins une gamme de fréquences et un modèle de sélection de fréquence qui désigne un ou plusieurs sous-ensembles de la au moins une gamme de fréquences qu'un terminal mobile doit surveiller, de sorte que les un ou plusieurs sous-ensembles comprennent une liste non inclusive de fréquences utilisées par des éléments de réseau de l'autre type, et
transmettre la NCL pour une réception par le terminal mobile.

12. L'élément de réseau du premier type selon la Revendication 11, où l'élément de réseau du premier type est configuré en outre de façon à indiquer la au moins une gamme de fréquences au moyen d'un premier numéro de canal, un numéro de canal de fréquence radio absolu, ARFCN, et d'informations de décalage.

13. L'élément de réseau du premier type selon la Revendication 12, où l'élément de réseau du premier type est configuré en outre de façon à indiquer que le premier numéro de canal correspond à une première fréquence dans la gamme de fréquences, et les informations de décalage indiquent un numéro de canal final dans la gamme.

14. L'élément de réseau du premier type selon la Revendication 12 où l'élément de réseau du premier type est configuré en outre de façon à désigner le premier numéro de canal comme correspondant à une fréquence médiane de la gamme de fréquences et les informations de décalage au moyen d'un nombre de fréquences de chaque côté de la fréquence médiane.

15. L'élément de réseau du premier type selon la Revendication 11, où l'élément de réseau du premier type est configuré en outre de façon à désigner la au moins une gamme de fréquences au moyen d'un premier numéro de canal, ARFCN, et d'une indication du nombre total de fréquences à surveiller.

16. L'élément de réseau du premier type selon l'une quelconque des Revendications 11 à 15, où l'élément de réseau du premier type est configuré en outre de façon à indiquer que le modèle de sélection de fréquence est un modèle pair/impair.

17. L'élément de réseau du premier type selon l'une quelconque des Revendications 11 à 15, où l'élément de réseau du premier type est configuré en outre de façon à indiquer que le modèle de sélection de fréquence indique chaque nième fréquence dans les un ou plusieurs gammes de fréquences.

18. L'élément de réseau du premier type selon l'une quelconque des Revendications 11 à 15 où l'élément de réseau du premier type est configuré en outre de façon à indiquer le modèle de sélection de fréquence en tant que modèle de topogramme binaire qui est utilisé de façon à sélectionner des fréquences particulières dans la au moins une gamme de fréquences.

19. Un terminal mobile configuré pour une utilisation dans un réseau de télécommunication mobile comprenant une pluralité d'éléments de réseau d'au moins un premier type et d'un autre type, où le terminal mobile est en communication avec un élément de réseau d'un premier type, le terminal mobile étant configuré en outre de façon à :
recevoir une liste de cellules voisines, NCL, à partir de l'élément de réseau du premier type, la NCL contenant des informations indiquant au moins une gamme de fréquences et un modèle de sélection de fréquence qui désigne un ou plusieurs sous-ensembles de la au moins une gamme de fréquences, où les un ou plusieurs sous-ensembles comprennent une liste non inclusive de fréquences utilisées par l'élément de réseau de l'autre type,
exécuter des mesures sur des canaux correspondant aux fréquences des un ou plusieurs sous-ensembles.

20. Le terminal mobile selon la Revendication 19 qui est configuré en outre de façon à lancer une resélection de cellule lorsque les mesures exécutées indiquent qu'un transfert est nécessaire.
